# EUROPEAN PATENT APPLICATION

(11) **EP 1 646 211 A1**
(43) Date of publication of application: **12.04.2006**
(21) Application number: 05021722.3
(22) Date of filing: 05.10.2005
(51) Int. Cl.: H04M 1/253, H04M 1/2745, H04L 29/12, H04M 3/42

(54) **IP telephone apparatus with display for selecting of contact information**

(30) Priority: 07.10.2004 JP 2004295171
(71) Applicant: MATSUSHITA ELECTRIC INDUSTRIAL CO., LTD., Kadoma-shi, Osaka 571-8501 (JP)
(72) Inventor: Miyajima, Akira, Yokohama-shi, Kanagawa 222-0023 (JP); Kobayashi, Kazuto, Kawasaki-shi, Kanagawa 213-0011 (JP)
(74) Representative: Grünecker, Kinkeldey, Stockmair & Schwanhäusser Anwaltssozietät

(57) **Abstract**

When a telephone number of a call destination is input from a source IP telephone apparatus (S101), a NAPTR record of the call destination is obtained from an ENUM server (S102), based on the input telephone number of the call destination. From the obtained NAPTR record, destination numbers and service names as the contact information for the call destination are retrieved and a list of contact information is displayed on its display (S106). When one service name is selected from a list of service names displayed on the display, the selected service name is highlighted and a corresponding destination number is displayed. A call is then transmitted to a destination terminal based on a contact information entry selected from the displayed list of contact information entries.

## Description

### BACKGROUND OF THE INVENTION

### 1. Field of the Invention

The present invention relates to an IP telephone apparatus that can be applied to an IP telephone system utilizing ENUM (tElephone NUmber Mapping) technology.

### 2. Description of Related Art

The recent growth of various communication terminals (e.g., ordinary telephones, internal telephones, IP telephones, cell phones, personal computers) has induced an increase in the number of users who have a plurality of communication terminals and contact entries. Meanwhile, ENUM has been proposed as a system that associates Internet resources with telephone numbers (RFC2916). The use of ENUM makes possible a system in which users store, in URI format, a plurality of destination numbers as contact information for one contact address (e.g., a telephone number). When the contact address of a call destination is input from a source terminal, the address can automatically be forwarded to a terminal designated by the call destination (Refer to Publication 1, for example).

### [Publication 1] Mastering TCP/IP SIP, chapter 14 (DNS and ENUM), co-authored by Henry Sinnreich Alan and B. Johnston, October 25, 2002

However, there has been no detailed study made as to methods for a caller to effectively utilize, at the caller terminal, a plurality of contact information entries (access method and destination number) stored by a call destination in order to activate more user-friendly functions in the caller terminal.

### SUMMARY OF THE INVENTION

The present invention is provided to address the above-described problems. The purpose of the present invention is to provide an IP telephone apparatus that is capable of retrieving and displaying, on its screen, contact information stored by a call destination, when a caller inputs the contact address of the call destination, and of transmitting a call to a contact information entry selected by the caller from the displayed contact information.

According to the present invention, a NAPTR record of the call destination is obtained from an ENUM server based on an input telephone number of the call destination, so that contact information is retrieved from the obtained NAPTR record and is displayed on its screen, after which a call is transmitted to a contact information entry selected by the caller from the displayed contact information.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 illustrates a network configuration to which an IP telephone system according to an embodiment of the present invention is applied;
Fig. 2 is a block diagram illustrating a configuration of an IP telephone apparatus that constitutes the IP telephone system according to the embodiment;
Fig. 3 illustrates a front view of an appearance of the IP telephone apparatus according to the embodiment;
Fig. 4 is a block diagram illustrating a typical configuration of an ENUM server in the IP telephone system according to the embodiment;
Fig. 5 illustrates an example of a set of NAPTR records that are stored in a DB of the ENUM server according to the embodiment;
Fig. 6 is a flowchart illustrating an operation starting from the point where the IP telephone apparatus performs a dial input operation to the point where the IP telephone apparatus displays contact information on its display according to the embodiment;
Fig. 7 illustrates an example of a NAPTR record that is stored by a call destination according to the embodiment;
Fig. 8 (a) illustrates an example when one service name is selected from a displayed list of service names for the IP telephone apparatus according to the embodiment;
Fig. 8 (b) illustrates an example when another service name is selected; and
Fig. 9 illustrates a different example of a screen that displays a list of service names according to the present embodiment.

### DETAILED DESCRIPTION OF PREFERRED EMBODIMENTS

The embodiments of the present invention are explained in the following, in reference to the above-described drawings.

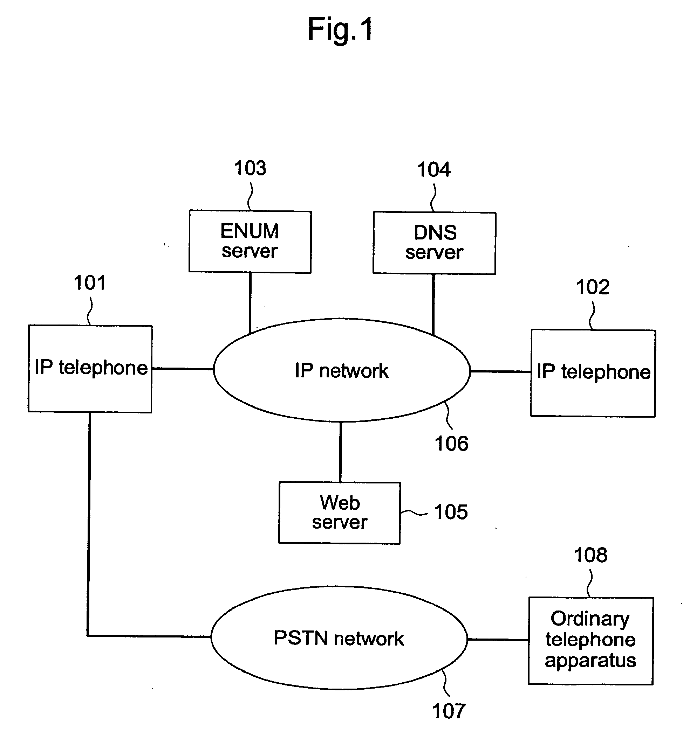

Fig. 1 illustrates a network configuration to which an IP telephone system according to an embodiment of the present invention is applied.

As shown in Fig. 1, a plurality of IP telephone apparatuses (hereafter referred to as "IP phone") 101, 102, ENUM server 103, DNS server 104 and Web server 105 as a database server are connected via IP network 106. IP phones 101 and 102 are examples of IP terminals that enable voice communication via IP network 106. IP phone 101 is configured to enable voice communication with ordinary telephone apparatus 108 by connecting to PSTN 107.

IP phone 101 (102) has a function that enables voice communication via IP network 106 after establishing a session with another IP telephone apparatus based on call control protocols such as H.323, H.248 and SIP (Session Initiation Protocol). IP phone 101 (102) also has a browsing function that allows users to access Web server 105 according to an http protocol and to read HTML texts provided by Web server 105.

ENUM server 103 is equipped with a database (DB) that stores a NAPTR resource record (hereafter referred to as "NAPTR record"), which is described later. The DB of ENUM server 103 stores one URI or a plurality of URIs for each domain name in the form of a NAPTR record, so that an IP terminal corresponding to such URIs can be identified on IP network 106. ENUM server 103 transmits, to IP phone 101 (102), a response (hereafter referred to as NAPTR response) including the NAPTR record stored in the DB in response to a query (hereafter referred to as "ENUM query") from IP phone 101 (102).

DNS server 104 is equipped with a DB that stores URIs specified in a NAPTR record and IP addresses corresponding to the URls. DNS server 104 retrieves, from the DB, an IP address corresponding to a URI and transmits, to IP phone 101 (102), the IP address in response to a query from IP phone 101 (102).

Web server 105 is equipped with a DB that stores information (hereafter referred to as "caller information"), the information being for identifying a caller of IP phone 101 (102) that is connected to IP network 106. Caller information includes the caller's telephone number (hereafter referred to as "caller number"), name, address, email address and image data such as a photo of the caller's face. Caller information is not limited to individual information and may include a company's name, telephone number, address, email address and advertisement. Web server 105 transmits, to IP phone 101 (102), caller information stored in the DB in response to a request from IP phone 101 (102) that has received a call.

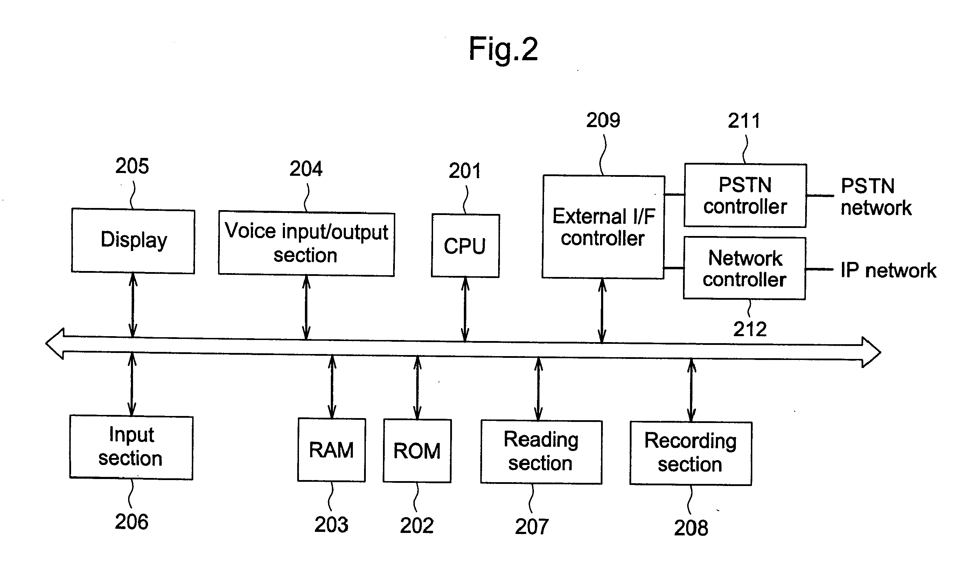

Fig. 2 is a block diagram illustrating a configuration of IP phone 101 according to the present embodiment. IP phone 102 has the same configuration as IP phone 101.

IP phone 101 may perform various installed functions such as IP telephone, facsimile and e-mail functions when CPU 201 reads and executes a program stored in ROM 202. ROM 202 stores an application program that provides functions such as IP telephone, facsimile and e-mail functions. RAM 203 serves as a work area for CPU 201.

IP phone 101 includes voice input/output section 204, display 205 and input section 206. Voice input/output section 204 is equipped with a microphone and a speaker for voice communication. Display 205 displays various information including contact information for a call destination. Input section 206 includes a numeric keypad, button, softswitch and the like. IP phone 101 further includes reading section 207 and recording section 208. Reading section 207 is used to scan documents to be faxed. Recording section 208 is used to print received data.

IP phone 101 is configured to be able to connect to PSTN 107 and IP network 106 via external I/F controller 209. External I/F controller 209 switches a connection to PSTN controller 211 or to network controller 212 under the control of CPU 201. PSTN controller 211 controls lines via PSTN 107. Network controller 212 controls reception and transmission of calls via IP network 106.

CPU 201 controls transmission of a query (hereafter referred to as "ENUM query") that inquires ENUM server 103 of a NAPTR record that corresponds to a destination terminal, reception of a response (hereafter referred to as "ENUM response") to the ENUM query. CPU 201 further controls transmission of a query (hereafter referred to as "IP address query") that inquires DNS server 104 of an IP address, and reception of a response (hereafter referred to as "IP address response") to the IP address query.

Display 205 is configured with an LCD (Liquid Crystal Display) and the like. Display 205 displays the current status of IP phone 101, input telephone numbers and other information. In addition, display 205 displays HTML texts downloaded from Web server 105. In addition, display 205 displays contact information for the call destination based on an ENUM response.

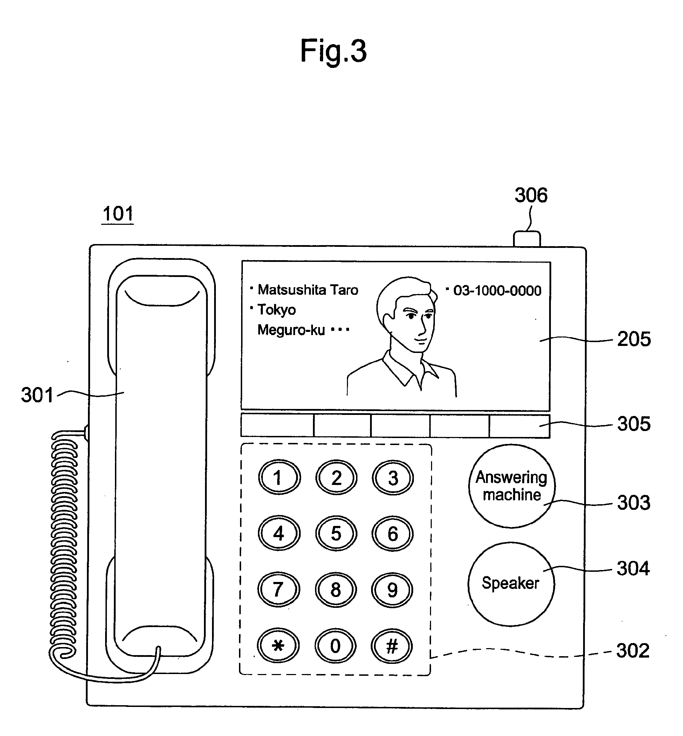

Fig. 3 illustrates a front view of an appearance of IP phone 101 according to the present embodiment. IP phone 102 has the same configuration as IP phone 101.

As shown in Fig. 3, IP phone 101 includes receiver 301 that receives an operator's voice. I P phone 101 further includes numeric keypad 302 that is used to input telephone numbers and other information. To the right side of numeric keypad 302, AM (Answering Machine) key 303 and speaker key 304 are located. AM key 303 is used to switch to the answering machine mode. Speaker key 304 is used to change to an external voice output. Furthermore, IP phone 101 includes, above numeric keypad 302, function key 305 that can be used to set various functions such as a single touch transmission. IP phone 101 further includes, on its side, interface (LAN I/F) 306 for LAN that is connected to IP network 106.

Display 205 configured with an LCD and the like is located above function key 305. Display 205 displays, for example, caller information (e.g., caller numbers and names) downloaded from Web server 105.

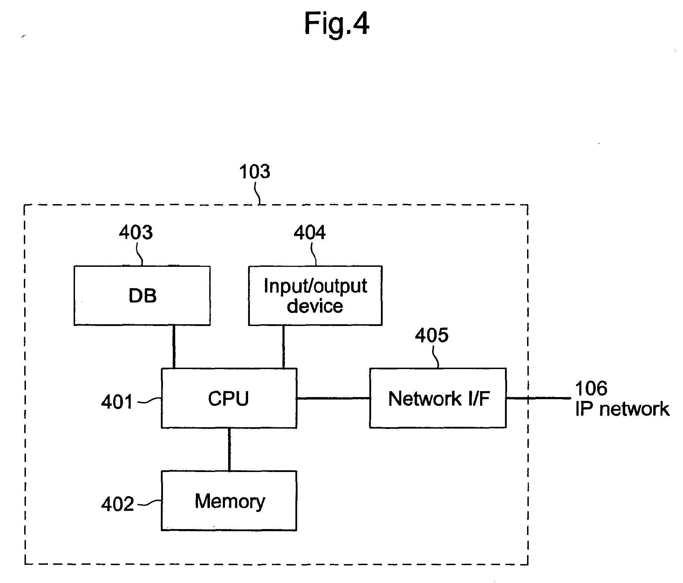

Fig. 4 is a block diagram illustrating a typical configuration of ENUM server 103 in the IP telephone system according to the embodiment. DNS server 104 and Web server 105 have the same configuration as ENUM server 103 except that they have different data stored in their databases.

As shown in Fig. 4, ENUM server 103 is configured with CPU 401 that controls the entire operation of ENUM server 103. Memory 402 is connected to CPU 401. Memory 402 has ROM and RAM functions. The ROM stores a control program for ENUM server 103, the control program being read and executed by CPU 401. The RAM functions as a work memory when CPU 401 executes the control program.

Database (DB) 403 is connected to CPU 401. DB 403 stores a NAPTR record. Upon receiving an ENUM query from IP phone 101, for example, CPU 401 searches for a NAPTR record corresponding to the ENUM query among the data stored in DB 403. CPU 401 then transmits the corresponding NAPTR record to IP phone 101 that has transmitted the ENUM query.

Furthermore, input/output device 404 is connected to CPU 401. Input/output device 404 includes an input device such as a keyboard and an output device such as a display. The input device is used, for example, to add and edit the data stored in DB 403. The output device is used for administrators of ENUM server 103 to verify the data stored in DB 403.

Furthermore, network interface (I/F) 405 is connected to CPU 401. Network I/F 405 is an interface with IP network 106 to which ENUM server 103 is connected.

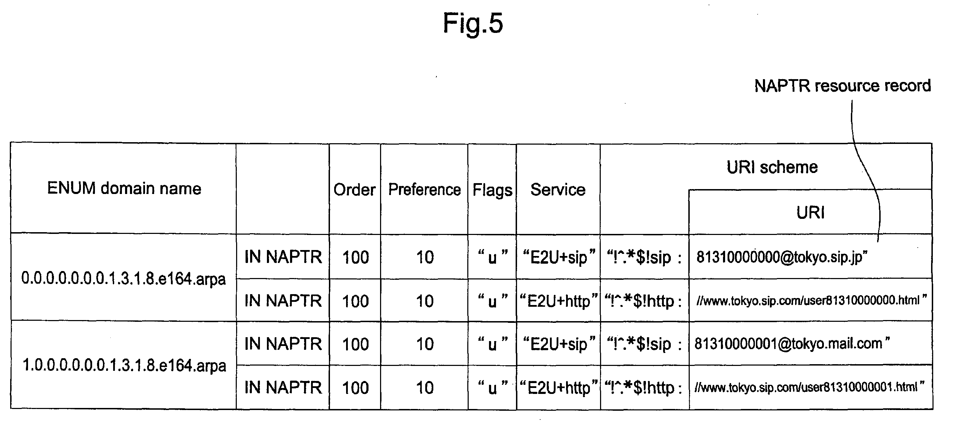

Fig. 5 illustrates an example of a set of NAPTR records stored in DB 403 of ENUM server 103 according to the present embodiment. Fig. 5 shows a case wherein the NAPTR records are stored in association with the domain names obtained from telephone numbers "0310000000" and "0310000001".

In Fig. 5, two URls "81310000000@tokyo.sip.jp" and "//www.tokyo.sip.com/user81310000000:html" are stored in connection with domain name "0.0.0.0.0.0.0.1.3.1.8.e164.arpa" associated with telephone number "0310000000". The service field of the first URI specifies "E2U+sip", which indicates that the terminal specified by "0310000000" is able to perform under the SIP protocol. The service field of the second URI specifies "E2U+http", which indicates that the terminal specified by "0310000000" is able to perform under the http protocol.

Furthermore, two URIs "81310000001@tokyo.mail.com" and "//www.tokyo.sip.com/user81310000001.html" are stored in connection with domain name "1.0.0.0.0.0.0.1.3.1.8.e164.arpa" associated with telephone number "0310000001". The service field of the first URI specifies "E2U+sip", which indicates that the terminal specified by "0310000001" is able to perform under the SIP protocol. The service field of the second URI specifies "E2U+http", which indicates that the terminal specified by "0310000001" is able to perform under the http protocol.

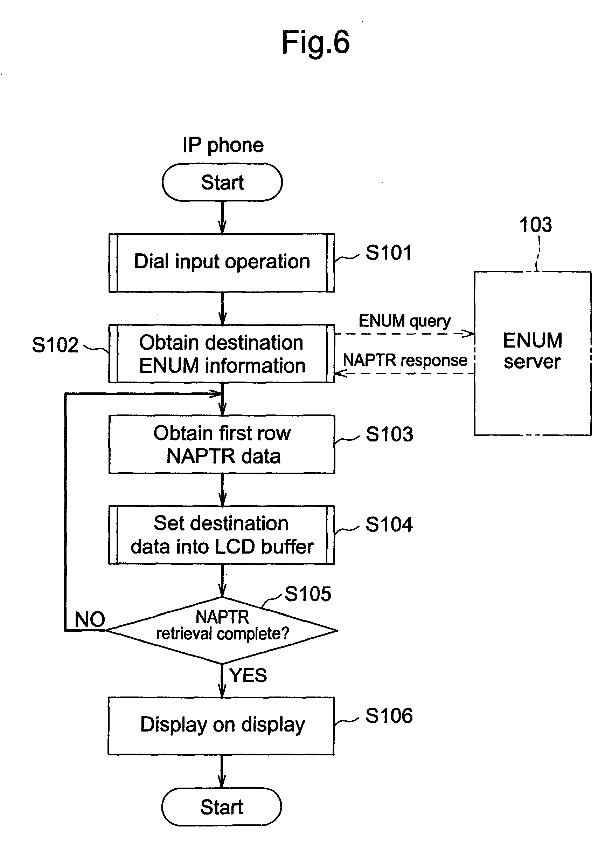

The following describes, with reference to the Fig. 6 flowchart, an operational flow in which IP phone 101 displays contact information for the call destination and the caller selects a contact information entry.

It is assumed here that DB 403 of ENUM server 103 stores a plurality of NAPTR records in association with a contact address (a telephone number converted into a domain form) for the call destination (IP phone 102 user).

When the caller dials the telephone number (regular telephone number in this example) of the call destination from numeric keypad 302 of IP phone 101, IP phone 101 receives the dialed telephone number (S101).

Next, IP phone 101 performs a process for obtaining the contact information for the call destination (S102). When the telephone number of the call destination (0455445XXX) is input, the input telephone number of the call destination is converted into a domain name stored in DB 403 of ENUM server 103. More specifically, the following process is executed. First, the input telephone number "0455445XXX" is converted into the E.164 number "+81 - 4 - 55445XXX" including the country code. Then, "+81455445XXX" is obtained by maintaining + at the beginning and the numbers. Next, non numerical symbols are deleted, and dots are inserted between the numbers, resulting in "8.1.4.5.5.4.4.5.X.X.X". Then, the numbers are reversed, and data string ".e164.arpa" is added at the end. As a result, domain name "X.X.X.5.4.4.5.5.4.1.8.e164.arpa" is obtained.

After creating the domain name based on the input telephone number of the call destination, IP phone 101 sends, to ENUM server 103, an ENUM query that inquires a NAPTR record by using the domain name.

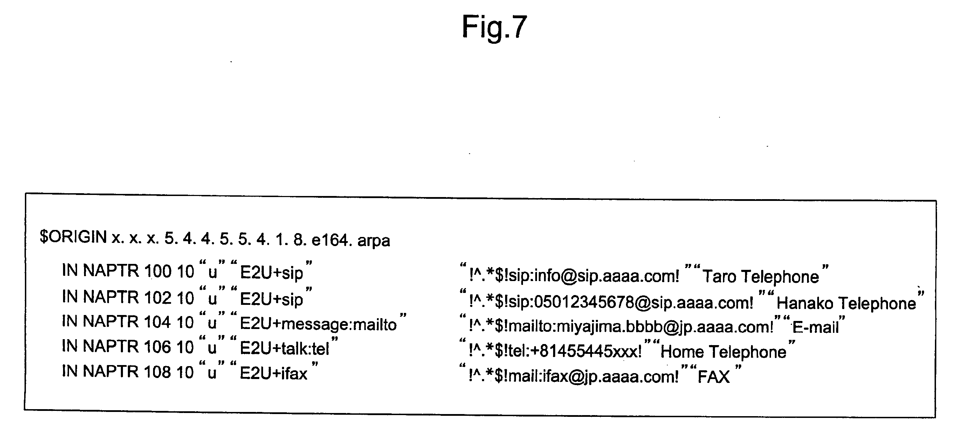

ENUM server 103 receives the ENUM query sent from IP phone 101. ENUM server 103 then searches DB 403 for the NAPTR record corresponding to the inquired domain name "X.X.X.5.4.4.5.5.4.1.8.e164.arpa" that is included in the ENUM query. As a result of the search, ENUM server 103 obtains the NAPTR record shown in Fig. 7 and sends, to IP phone 101, an ENUM response that includes the NAPTR record.

IP phone 101 obtains, from ENUM server 103, the NAPTR record shown in Fig. 7 as an ENUM response to the ENUM query.

Fig. 7 shows a detailed example of a NAPTR record including contact information designated by the destination IP phone 102 user in association with a telephone number (a telephone number converted into a domain form) as its contact address. The NAPTR record shown in Fig. 7 describes the contact information (Taro Telephone, Hanako Telephone) using SIP in the first and second rows, and the e-mail contact information (E-mail) in the third row. In addition, the contact information by ordinary telephone (Home Telephone) in the fourth row and the contact information by the Internet FAX (FAX) in the fifth row are described. In other words, the call destination having contact address "X.X.X.5.4.4.5.5.4.1.8.e164.arpa" stores two IP phone numbers using SIP, one e-mail address, one regular telephone number and one FAX number as its destination numbers.

IP phone 101 retrieves the fist row from the obtained NAPTR record (S103). More specifically, IP phone 101 at least retrieves the contact information included in the first row of the NAPTR record. In this example, destination number "sip:info@sip.aaaa.com" and service name "Taro Telephone" using the destination number are retrieved. As shown in Fig. 7, the service names are specified following the destination numbers. The service names are determined by the call destination.

IP phone 101 sets the retrieved contact information as destination data into the LCD buffer of display 205 (not shown in the figure) (S104). When the retrieval of the first row of the NAPTR record is complete, contact information from each row is sequentially retrieved in the same process (S103, S104, S105), moving down the rows.

After the contact information from every row of the NAPTR record obtained in step S102 is retrieved (S105), a list of service names is displayed on the LCD of display 205 (S106).

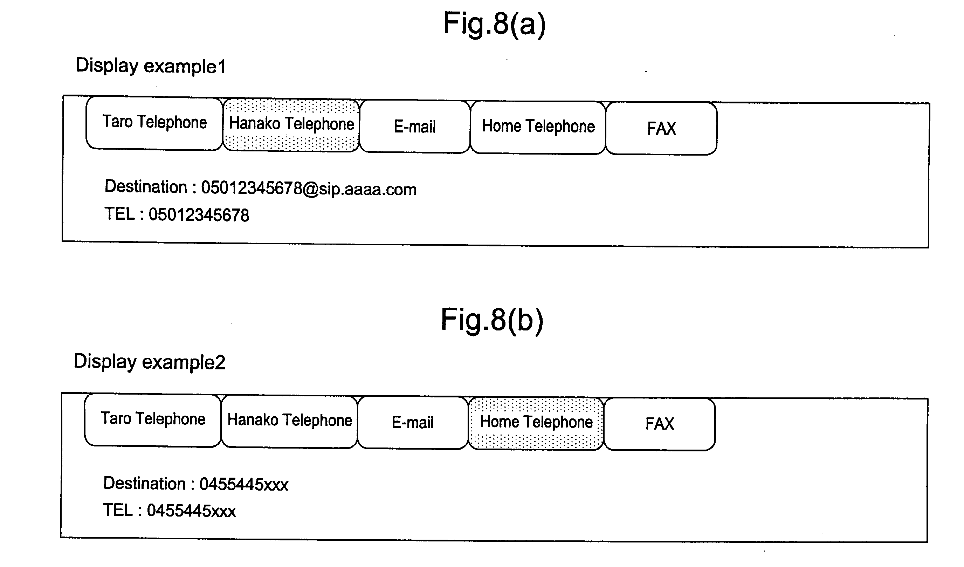

Fig. 8 (a) (b) illustrate examples of LCD screens displaying the list of service names for the call destination. "Taro Telephone", "Hanako Telephone", "E-mail", "Home Telephone" and "FAX" are displayed as service names. Fig. 8 (a) indicates a case wherein "Hanako Telephone" is selected by the caller. The selection of a service name is made from input section 206. The selected service name (Hanako Telephone) is highlighted (although highlighting is used in the present example, display methods are not limited to highlighting), and the destination number (05012345678@sip.aaaa.com) corresponding to this service name is displayed under the service name (Hanako Telephone). Fig. 8 (b) illustrates a case wherein "Home Telephone" is selected.

When the start button (not shown in the figure) is pressed upon selecting a service name on the LCD of display 205, IP phone 101 performs a transmission process to the destination number, by an access method in accordance with the selected service name. For example, when "Taro Telephone" is selected, an inquiry for the IP address of destination number "info@sip.aaaa.com!" is sent to DNS server 104, after which the IP address of IP phone 102 is obtained. Next, an INVITE request is sent to the obtained IP address as its destination address. The INVITE request is sent in the form of an IP packet. In addition, when a SIP server is involved to perform call connections, there is no need to inquire DNS server 104 of an IP address. Signaling is then executed based on SIP to establish a session, thereby enabling voice communication. When "Home Telephone" is selected, a call is transmitted via PSTN 107 by using a regular telephone number. When "E-mail" is selected, an e-mail function starts, thereby allowing users to enter an e-mail message and send the e-mail. Such transmission processes are performed by CPU 201 as a transmitter.

As described above, according to the present embodiment, it is possible to display, on display 205, the list of service names as contact information for the call destination by the caller simply inputting, from IP phone 101, one telephone number of the call destination. When the caller selects one service name from the displayed list of service names, the destination number corresponding to the selected service name may be displayed. Upon confirming the destination number, the caller becomes able to transmit a call to a contact information entry designated by the call destination. In addition, since it is possible to display, on display 205 of the source IP telephone, service names (e.g., Taro Telephone, Hanako Telephone) created by the call destination, the user is able to make a destination number selection more easily and accurately than using only a list of destination numbers.

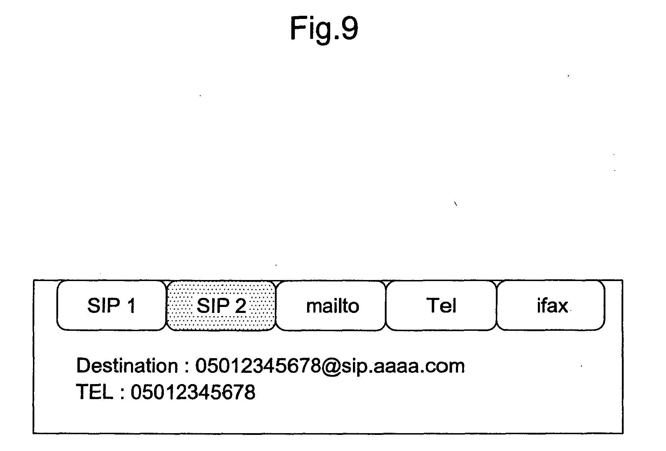

In addition, as shown in Fig. 9, it is possible to display a list of service names (sip, mailto, tel, ifax) included in the NAPTR record instead of service names created by the call destination. As illustrated in Fig. 9, when there are a plurality of identical service names (sip), it is also possible to differentiate them by suffixing serial numbers, for example, sip1 and sip2.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2004 - 295171 filed on October 07, 2004, entire content of which is expressly incorporated by reference herein.

## Claims

1. An IP telephone apparatus comprising:
a dialing unit that is used to input a telephone number of a call destination;
a data obtainer that obtains, from an ENUM server, a NAPTR record of the call destination based on the input telephone number of the call destination;
a controller that, retrieves, from the obtained NAPTR record, contact information of the call destination and displays, on its display, a list of contact information entries; and
a transmitter that transmits a call to the destination terminal, based on a contact information entry selected from the displayed list of contact information entries.

2. The IP telephone apparatus according to claim 1, wherein said controller retrieves, from the obtained NAPTR record, destination numbers and service names as the contact information and displays, of the retrieved contact information, the service names as the list of contact information entries.

3. The IP telephone apparatus according to claim 2, wherein, when one service name is selected from the list of service names displayed on its display, the selected service name is highlighted and a corresponding destination number is displayed.

4. The IP telephone apparatus according to claim 1, wherein the service name is a character string that is created by the call destination.

5. The IP telephone apparatus according to claim 1, wherein the service name is a service name included in a URI contained in the NAPTR record.

6. A contact information display method, comprising:
dialing to input a telephone number of a call destination;
obtaining, from an ENUM server, a NAPTR record of the call destination based on the input telephone number of the call destination;
retrieveing, from the obtained NAPTR record, contact information of the call destination and displaying, on its display, a list of contact information entries; and
transmitting a call to the destination terminal, based on a contact information entry selected from the displayed list of contact information entries.
